# EUROPÄISCHE PATENTSCHRIFT

(11) **EP 2 706 385 B1**
(45) Veröffentlichungstag und Bekanntmachung des Hinweises auf die Patenterteilung: **10.02.2016**
(21) Anmeldenummer: 13179619.5
(22) Anmeldetag: 07.08.2013
(51) Int. Cl.: G01V 8/10, G01D 11/30, F16B 3/00

(54) **Befestigungsvorrichtung und Verfahren zur Befestigung**
Fixing device and method for fixing for a lightcurtainhousing
Dispositif de fixation et procédé de fixation

(30) Priorität: 05.09.2012 DE 102012108262
(43) Veröffentlichungstag der Anmeldung: 12.03.2014
(73) Patentinhaber: SICK AG, 79183 Waldkirch (DE)
(72) Erfinder: Friedrich, Ralf, 79189 Bad Krozingen (DE); Meyer, Christof J., 79261 Bleibach (DE); Klingelhöfer, Dr., Christian, 79110 Freiburg (DE)
(74) Vertreter: Ludewigt, Christoph

(56) Entgegenhaltungen:
- EP-B1- 1 111 249
- DE-A1-102011 050 896
- DE-U1- 20 111 588
- DE-U1-202007 005 332
- US-A1- 2002 190 166
- US-A1- 2003 106 992
- US-A1- 2004 206 869

## Beschreibung

Die vorliegende Erfindung betrifft eine Befestigungsvorrichtung für ein Lichtgittergehäuse.

Die DE 10 2006 053 003 B4 betrifft eine Befestigungsvorrichtung für ein Lichtgitter, dessen Komponenten in wenigstens einem Gehäuse integriert sind. Die Befestigungsvorrichtung umfasst eine Drehhalterung mit wenigstens einem ringförmigen Befestigungselement. Wenigstens Segmente der Kanten des wenigstens einen Gehäuses des Lichtgitters weisen Abrundungen auf. Diese bilden eine Aufnahme für das Befestigungselement derart, dass bei an der Drehhalterung fixiertem Gehäuse die Innenwand des ringförmigen Befestigungselements direkt an den Abrundungen anliegt.

Die DE 10 2006 009 115 A1 betrifft eine Klemmvorrichtung mit einem Klemmbügel und einem Klemmfuß zum Befestigen und Justieren eines optoelektronischen Sensors, insbesondere eines Lichtgitters an einer Befestigungsstange. Dazu ist vorgesehen, dass eine Klemmschraube, die den Sensor und den Klemmfuß durchdringt, in ein Gewinde an der dem Klemmfuß zugewandten Endseite des Klemmbügels eingreift. Dadurch wird der Klemmbügel, der die Befestigungsstange auf der dem Klemmfuß gegenüberliegenden Seite zumindest geringfügig mehr als mittig hintergreift, mit der Klemmschraube in den Klemmfuß eingezogen, so dass der Klemmbügel den Sensor, zusammenwirkend mit dem Klemmfuß, an der Befestigungsstange kraftschlüssig verbindet.

Die DE 198 17 710 A1 offenbart einen Pedalarm, beispielsweise für ein Bremspedal. Der Pedalarm weist ein Rohrstück auf mit zwei gegenüberliegenden Abflachungen. Über diese Abflachungen kann das Rohrstück über eine Öffnung, deren Weite dem Abstand der Abflachungen entspricht, in ein Gleitlager eingeführt werden.

Die DE 25 56 459 A1 betrifft eine Gelenkvorrichtung für Türen von Schränken. Dabei besitzt die Tür eine Aussparung mit einem kreisförmigen Querschnitt und einer Öffnung, die kleiner ist, als der kreisförmige Querschnitt und parallele Seiten aufweist. In diese Öffnung wird ein auf zwei Seiten abgeflachtes Teil eingeführt, welches durch Verdrehen um 90° in der Öffnung mit einer Nase fixiert wird.

Die DE 20 2007 005 332 U1 offenbart eine ringförmige Klemmvorrichtung zum Befestigen und/oder Justieren eines optoelektronischen Sensors mit einer Madenschraube.

Die DE 10 2011 050 896 A1 offenbart eine Befestigungsvorrichtung mit einem Grundkörper, einem Klemmkörper und einem Klemmbügel zum Befestigen und/oder Justieren eines optoelektronischen Sensors an einem Montagekörper, wobei der Klemmbügel ringförmig ausgebildet ist.

Die DE 201 11 588 U1 offenbart eine Befestigungsvorrichtung für einen optischen Sensor, wobei der Sensor in wenigstens einem Gehäuse integriert ist, welches wenigstens abschnittsweise kugelförmig ausgebildet ist.

Die US 2003/0106992 offenbart ein Lichtgitter mit einer halbrunden Gehäuseform und zwei Nuten, wobei ein Lichtgitterhalter vorgesehen ist, der in die Nuten eingreift.

Die EP 1 111 249 B1 offenbart eine Klemmvorrichtung für einen Sensor an einer Stange mit einer Arretierschraube.

Die US 2004/0206869 A1 offenbart einen Laufschienen-Klemmhalter für die Befestigung von Laufschienen für Schiebetürsysteme.

Die US 2002/0190166 A1 offenbart einen Halter für eine elektro-optische Komponente auf einer Leiterplatte.

Der Erfindung liegt die Aufgabe zugrunde, eine verbesserte Befestigungsmöglichkeit für Lichtgittergehäuse bereitzustellen, die mit möglichst wenig Einzelteilen auskommt, die es erlaubt das Lichtgittergehäuse, an den kurzseitigen Enden direkt an benachbarte Teile angrenzend zu befestigen und die Befestigungsrichtung der Befestigungsvorrichtung wählbar ist.

Die Aufgabe wird gelöst mit einer Befestigungsvorrichtung wie in Anspruch 2 mit einem Basisteil zum Befestigen und/oder Justieren eines Lichtgittergehäuses mit einem teilrunden Gehäusequerschnitt in einem Gehäuseabschnitt an einem Montagekörper, wobei das Basisteil eine offene Aufnahme für das Lichtgittergehäuse aufweist, wobei die Aufnahme im Querschnitt einen Kreisabschnitt bildet und der Kreisabschnitt einen Winkel von mehr als 180 Grad aufweist, wobei die Aufnahme des Basisteils geringfügig kleiner ausgebildet ist als der teilrunde Gehäusequerschnitt des Gehäuseabschnitts, wobei das Lichtgittergehäuse in der Aufnahme angeordnet ist und von der Aufnahme durch Kraftschluss gehalten ist.

Die Aufgabe wird weiter gelöst durch ein Verfahren wie in Anspruch 7 zum Befestigen und/oder Justieren eines Lichtgittergehäuses mit einem teilrunden Gehäusequerschnitt in einem Gehäuseabschnitt mit einem Basisteil an einem Montagekörper, wobei das Basisteil mittels einer offenen Aufnahme das Lichtgittergehäuse aufnimmt, wobei die Aufnahme im Querschnitt einen Kreisabschnitt bildet und der Kreisabschnitt einen Winkel von mehr als 180 Grad aufweist, wobei das Lichtgittergehäuse in der Aufnahme angeordnet wird, indem das Lichtgittergehäuse in einer ersten Orientierung in die Aufnahme des Basisteils eingeführt wird und in der Aufnahme um 90° gedreht wird, wobei die Aufnahme des Basisteils geringfügig kleiner ausgebildet ist als der teilrunde Gehäusequerschnitt des Gehäuseabschnitts und von der Aufnahme durch Kraftschluss gehalten wird.

Durch die Befestigungsvorrichtung kann das Lichtgittergehäuse zunächst gehalten werden, ohne dass zusätzliche Werkzeuge oder weitere Befestigungsmittel notwendig sind.

Das Lichtgitter weist einen teilrunden Gehäuseabschnitt auf, wobei der Gehäuseabschnitt im Bereich einer Frontscheibe flach ausgebildet ist, wodurch ein teilrunder Gehäusequerschnitt zumindest in einem Gehäuseabschnitt gebildet ist.

Das Lichtgittergehäuse wird zunächst seitlich, so dass die Frontscheibe, also der flache Teil des Lichtgittergehäuses zur Seite hin zeigt, in das Basisteil eingeschoben. Sobald sich das Lichtgittergehäuse in der offenen Aufnahme befindet, wird das Lichtgittergehäuse entlang einer Längsachse um 90 Grad gedreht, so dass die Frontscheibe von dem Basisteil weg zeigt. Durch diese Bewegung wird das Lichtgitter mit dem teilrunden Gehäuseabschnitt in der offenen Aufnahme des Basisteils gedreht. Die offene Aufnahme des Basisteils ist dabei geringfügig kleiner ausgebildet, so dass das Lichtgittergehäuse durch Kraftschluss in dem Basisteil gehalten wird. Dadurch dass die offene Aufnahme des Basisteils im Querschnitt einen Kreisabschnitt mit einem Winkel von mehr als 180 Grad aufweist, kann das Lichtgittergehäuse nur um 90° gedreht in das Basisteil eingeschoben werden und kann nach einer Drehung von ca. 90 Grad auch nicht mehr direkt in Richtung der Öffnung des Basisteils gelöst werden oder herausfallen, wodurch ein Formschluss gebildet ist. Dadurch wird das Lichtgittergehäuse zunächst allein durch das Basisteil durch Kraftschluss gehalten. Die offene Aufnahme mit einem Kreisabschnitt mit einem Winkel von mehr als 180 Grad weist insbesondere einen Winkel von weniger als 210 Grad auf und insbesondere weniger als 235 Grad auf, je nach dem wie groß der abgeflachte Teil des Lichtgittergehäuses durch die Frontscheibe ausgebildet ist.

In dieser Position kann das Lichtgitter nun in einem Winkel von ca. +/- 15 Grad um die Längsachse gedreht werden, um das Lichtgitter auszurichten. Hierbei wird beispielsweise manuell mit der bloßen Hand der Kraftschluss überwunden um das Lichtgitter zu drehen. Während dieser Justage wird das Lichtgittergehäuse in jeder gewünschten gedrehten Position weiter durch Kraftschluss gehalten, so dass eine Justage überprüft werden kann.

Das Basisteil selbst ist mit Schrauben oder anderen Befestigungsmitteln an einem Montagekörper, beispielsweise einem Maschinenrahmen oder dergleichen befestigt. Zum Befestigen oder Lösen des Lichtgittergehäuses von dem Basisteil braucht das Basisteil selbst nicht von dem Montagekörper gelöst werden. Das Basisteil bleibt an dem Montagekörper befestigt, so dass die Position des Lichtgittergehäuses festgelegt ist. Dadurch ist das Lichtgittergehäuse bei einem Tausch in seiner Lage bereits vorjustiert.

Vorteilhaft ist an dem Basisteil ein Klemmteil mittels einer Schraube befestigt. Das Klemmteil ist an einer Seite der offenen Aufnahme des Basisteils angeordnet und über eine Schraube mit dem Basisteil verbunden. Das Klemmteil weist an seiner Unterseite, die zum Basisteil hin zeigt, eine schräge Fläche auf. Die schräge Fläche ist so ausgebildet, dass das Klemmteil an der Seite zur offenen Aufnahme hin kürzer ist als die dazu gegenüberliegende Seite. Dadurch wird das Klemmteil beim Einschrauben in das Basisteil in Richtung der offenen Aufnahme und damit in Richtung des Lichtgittergehäuses gekippt, so dass das Lichtgittergehäuse in dem Basisteil durch das Klemmteil geklemmt wird. Dadurch kann das Lichtgittergehäuse in dem Basisteil final in seiner Endlage positioniert werden, nach dem das Lichtgittergehäuse justiert worden ist. Gemäß der Erfindung besteht die Befestigungsvorrichtung, exklusive von Befestigungsschrauben, lediglich aus zwei Teilen, nämlich dem Basisteil und dem Klemmteil.

In Weiterbildung der Erfindung weist das Basisteil Befestigungsöffnungen auf, die senkrecht zueinander sind, die jeweils eine alternative Befestigung des Basisteils mit dem Montagekörper ermöglichen, wobei die Montage des Basisteils in jeweils einer der zwei zueinander senkrechten Richtungen erfolgen kann. Das Basisteil kann dadurch an einer ersten oder alternativ einer dazu senkrechten zweiten Seite mit dem Montagekörper verbunden werden. Dadurch ist die Position des Basisteils flexibel wählbar an einem Montagekörper. Dadurch kann die Befestigungsvorrichtung flexibel eingesetzt werden. Die Befestigungsöffnungen dienen zur Aufnahme von Befestigungsschrauben oder anderen Befestigungsmitteln.

In Weiterbildung der Erfindung weist das Lichtgitter abschnittsweise, bevorzugt an den Endbereichen des länglichen Lichtgittergehäuses, einen rechteckförmigen Bereich auf, welcher einen Anschlag und/oder eine Positionsmarke für das Basisteil in Längsrichtung an dem Lichtgitters bildet. Selbst wenn das Lichtgittergehäuse trotz des Kraftschlusses zwischen Basisteil und Lichtgittergehäuse bei einer senkrechten Montage ins Rutschen kommen sollte, wird durch den rechteckförmigen Bereich verhindert, dass das Lichtgitter aus dem Basisteil heraus gleitet, da der rechteckförmige Bereich als Anschlag dient. Der rechteckförmige Bereich kann weiter als Positionsmarke dienen, wodurch das Lichtgittergehäuse entlang seiner Längsachse in seiner Position fixiert ist.

Gemäß einer bevorzugten Ausführungsform ist auf einer Stirnseite des Basisteils eine Winkelskala angeordnet. Mit Hilfe einer Positionsmarke an dem Lichtgittergehäuse kann eine bestimmte Drehposition, eingestellt auf einen bestimmten Winkel an der Winkelskala, abgelesen werden und jederzeit erneut exakt eingestellt werden, beispielsweise bei einem Austausch des Lichtgittergehäuses.

Gemäß einer bevorzugten Ausführungsform besteht das Basisteil und/oder das Klemmteil aus Polyphthalamid, Kurzzeichen PPA, mit einem Glasfaseranteil von 20% bis 40%, insbesondere 30%. Polyphathalamide besitzen eine hohe Wärmeformbeständigkeit und eine gute Dimensionsstabilität mit nur geringem Verzug. Des Weiteren besitzen sie eine hohe Zugfestigkeit, Steifigkeit und Kerbschlagzähigkeit. Demnach ist Polyphthalamid eine kostengünstige Alternative zu einer Ausführung aus Metall.

In der Zeichnung zeigt:
Figur 1 eine erfindungsgemäße Befestigungsvorrichtung zum Befestigen eines Lichtgittergehäuses;
Figur 2 eine Befestigungsvorrichtung in Explosionsdarstellung;
Figur 3 eine Befestigungsvorrichtung an einem Montagekörper;
Figur 4 eine Befestigungsvorrichtung in perspektivischer Ansicht;
Figur 5 und 6 eine Befestigungsvorrichtung in einer Schnittdarstellung;
Figur 7 bis Figur 9 ein Verfahren zur Montage eines Lichtgittergehäuses.

In den nachfolgenden Figuren sind gleiche Teile mit gleichen Bezugszeichen gekennzeichnet.

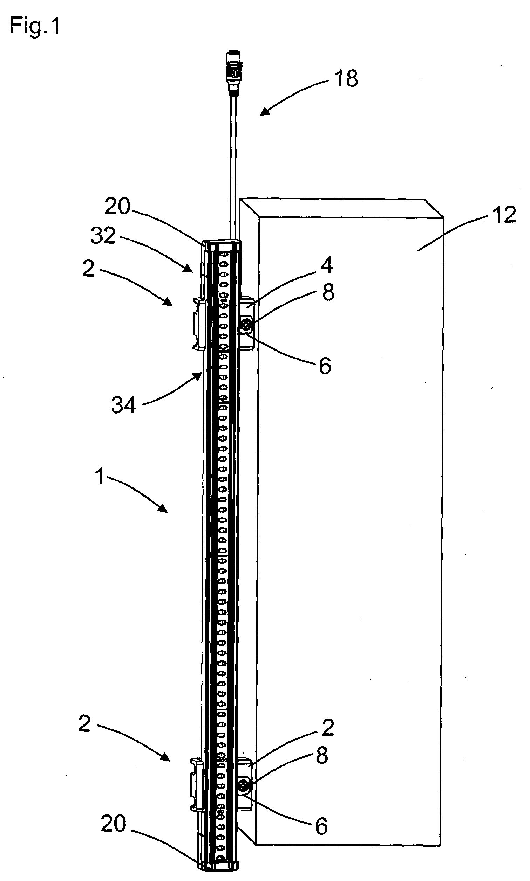

Figur 1 zeigt ein Lichtgitter mit einem elektrischen Anschluss 18. Dieses Lichtgitter weist ein Lichtgittergehäuse 1 auf, welches im Wesentlichen aus einem langgestreckten Hohlprofil besteht, in dessen Inneren Optiken und elektronische Komponenten wie beispielsweise wenigstens ein Lichtsender und/oder wenigstens ein Lichtempfänger angeordnet sind. Das Lichtgittergehäuse 1 weist daher an einer Seite eine für das von den Lichtsendern ausgesandte bzw. den Lichtempfängern zu empfangene Licht durchlässige Frontscheibe 16 auf, durch welche das Licht aus dem Lichtgittergehäuse 1 austreten bzw. in das Lichtgittergehäuse 1 eintreten kann. Das Lichtgittergehäuse 1 ist an seinen jeweiligen kurzseitigen Enden mit Endkappen 20 verschlossen. Die Anzahl der Lichtsender und/oder Lichtempfänger kann dabei beispielsweise 1 bis ca. 240 betragen.

Figur 1 zeigt weiter eine Befestigungsvorrichtung 2 mit einem Basisteil 4 zum Befestigen und/oder Justieren des Lichtgittergehäuses 1 mit einem teilrunden Gehäusequerschnitt in einem Gehäuseabschnitt an einem Montagekörper 12, wobei das Basisteil 4 eine offene Aufnahme für das Lichtgittergehäuse 1 aufweist, wobei die runde Aufnahme im Querschnitt einen Kreisabschnitt 30 bildet und der Kreisabschnitt einen Winkel α von mehr als 180 Grad aufweist, wobei das Lichtgitter in der Aufnahme angeordnet ist und von der Aufnahme durch Kraftschluss gehalten ist.

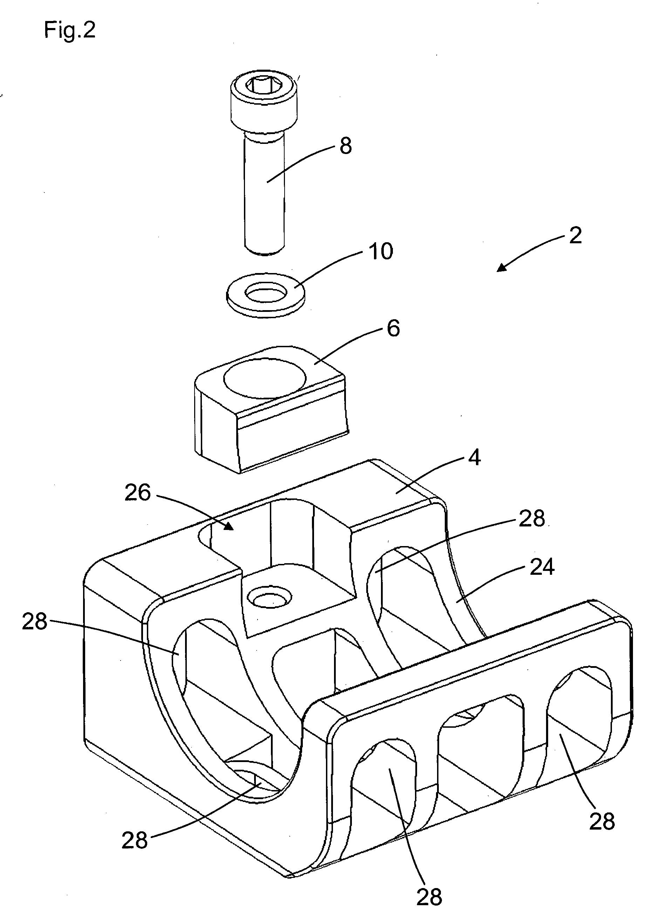

Figur 2 zeigt eine erfindungsgemäße Befestigungsvorrichtung in einer Explosionsdarstellung mit den Teilen Basisteil 4, Klemmteil 6, Schraube 8 und optionaler Scheibe 10. Das Basisteil weist die offene Aufnahme 24 für das Lichtgittergehäuse auf. Der Kreisabschnitt 30 im Querschnitt der offenen Aufnahme 24 weist einen Winkel α von mehr als 180 Grad auf. Das Basisteil weist eine Aufnahme 26 für das Klemmteil 6 auf. Das Klemmteil wird mit Hilfe der Schraube 8 in dem Basisteil befestigt. Optional wird zur besseren Befestigung noch eine Scheibe 10 zwischen Schraube und Klemmteil eingelegt.

Das Basisteil weist mehrere Befestigungsöffnungen 28 auf, die senkrecht zueinander sind, die eine alternative Befestigung des Basisteils mit dem Montagekörper ermöglichen, wobei die Montage des Basisteils in jeweils zwei zueinander senkrechten Richtungen erfolgen kann.

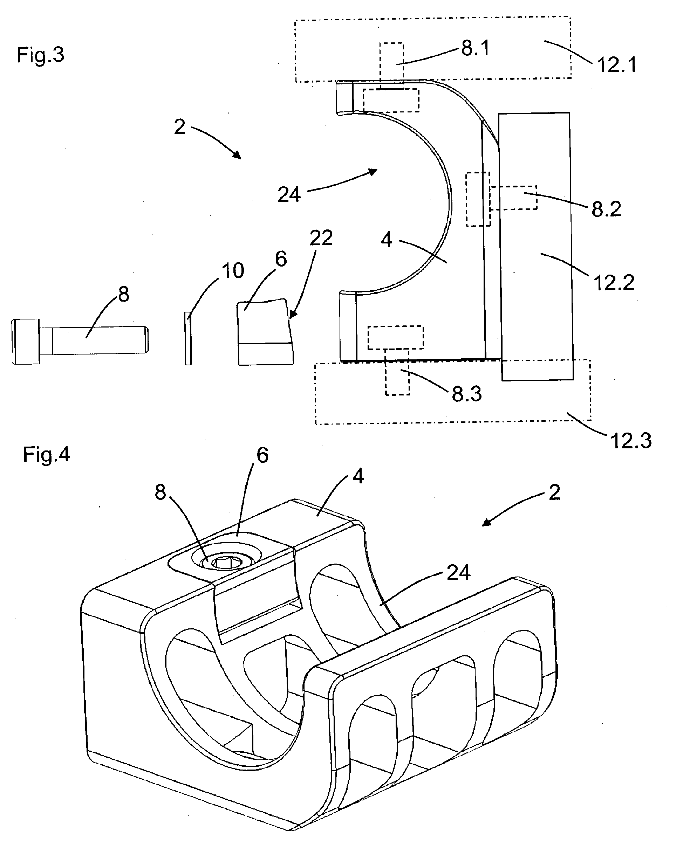

In Figur 3 sind die verschiedenen Befestigungsmöglichkeiten des Basisteils in verschiedenen Richtungen an verschiedenen Montagekörpern dargestellt. Beispielsweise kann das Basisteil mit der Schraube 8.1 an dem Montagekörper 12.1 in einer ersten Richtung montiert werden. Alternativ dazu ist es jedoch auch möglich, das Basisteil mit der Schraube 8.2 an dem Montagekörper 12.2 zu montieren, wobei die Befestigungsrichtung senkrecht zu der ersten Befestigung mit der Schraube 8.1 ist. Weiter ist es alternativ möglich, das Basisteil mit Hilfe der Schraube 8.3 an dem Montageteil 12.3 zu montieren, wobei die Montagerichtung entgegengesetzt zu der Montagerichtung mit der Schraube 8.1 ist. Es wäre weiterhin auch denkbar senkrecht zu den Schrauben 8.1 bis 8.2 weitere Befestigungsöffnungen vorzusehen, um eine Befestigung an allen Seiten, abgesehen von der Seite mit der offenen Aufnahme für das Lichtgittergehäuse, eine Befestigung mit dem Montagekörper vorzusehen.

In Figur 3 ist das Klemmteil 6 im Detail dargestellt. Das Klemmteil 6 weist an seiner Unterseite, die zum Basisteil hin zeigt, eine schräge Fläche 22 auf. Die schräge Fläche 22 ist so ausgebildet, dass das Klemmteil 6 an der Seite zur offenen Aufnahme kürzer ist als die dazu gegenüberliegende Seite. Dadurch wird das Klemmteil 6 beim Einschrauben in das Basisteil 4 in Richtung der offenen Aufnahme und damit in Richtung des Lichtgittergehäuses gekippt, so dass das Lichtgittergehäuse in dem Basisteil 4 durch das Klemmteil 6 geklemmt wird. Dadurch kann das Lichtgittergehäuse in dem Basisteil 4 final in seiner Endlage positioniert werden, nachdem das Lichtgittergehäuse justiert worden ist.

Figur 4 zeigt die Befestigungsvorrichtung 2 in montiertem Zustand mit Basisteil 4, Klemmteil 6 und Schraube 8. Das Klemmteil 6 fügt sich dabei derart in das Basisteil ein, dass das Klemmteil 6 nicht in die offene Aufnahme des Basisteils hineinragt, sondern die gleich Form in dem Teilabschnitt aufweist.

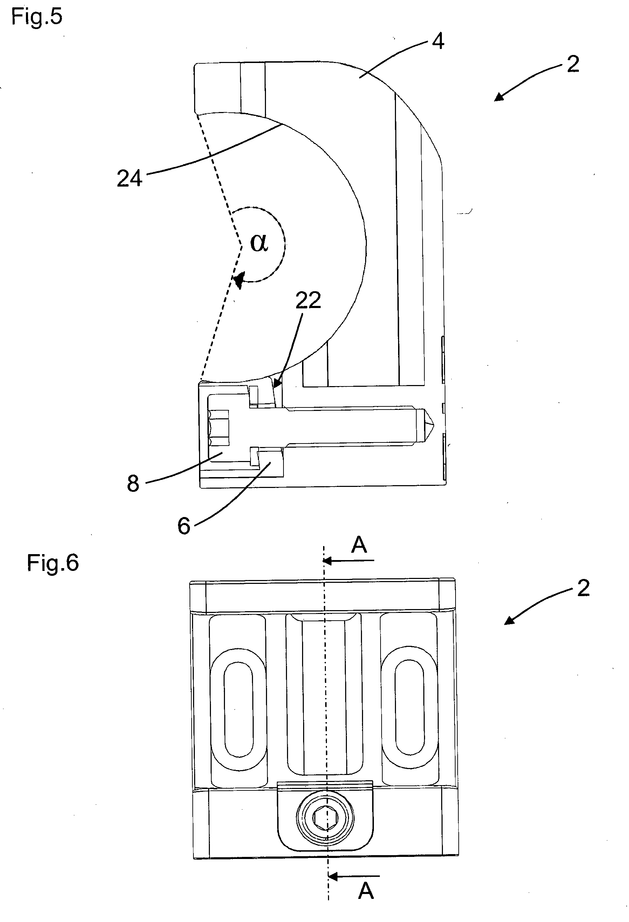

Figur 5 zeigt einen Schnitt durch die montierte Befestigungsvorrichtung gemäß Figur 4 entlang einer Schnittlinie A-A gemäß Figur 6. In Figur 5 ist die runde Aufnahme mit einem Kreisabschnitt 30 mit einem Winkel α von mehr als 180 Grad dargestellt. Weiter ist die schräge Fläche 22 des Klemmteils dargestellt.

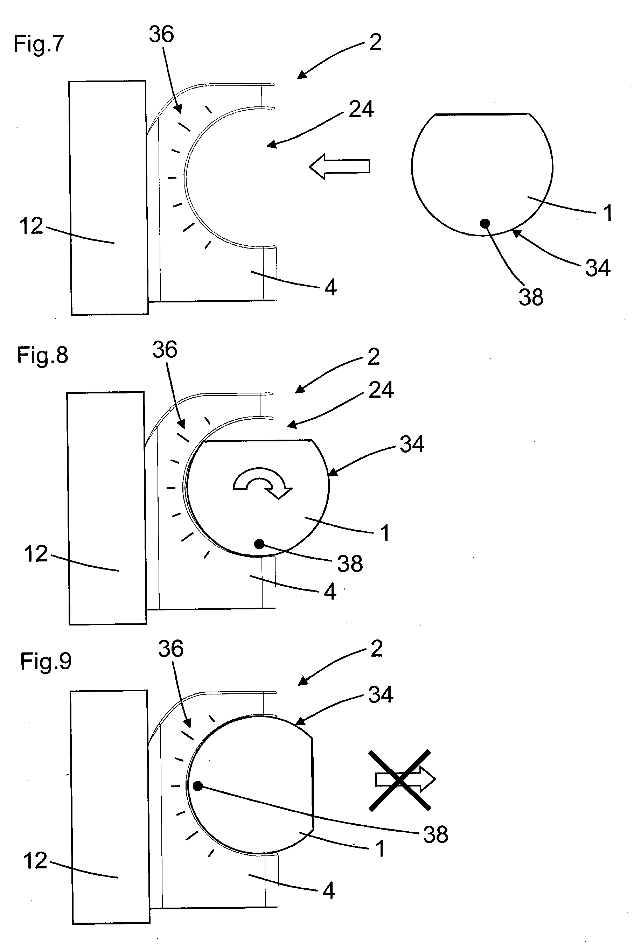

Figur 7 zeigt das Verfahren zum Befestigen und/oder Justieren des Lichtgittergehäuses 1 mit dem teilrunden Gehäusequerschnitt 34 in einem Gehäuseabschnitt mit dem Basisteil 4 an dem Montagekörper 12, wobei das Basisteil 4 mittels der offenen Aufnahme im Querschnitt einen Kreisabschnitt (30) bildet und der Kreisabschnitt mit einem Winkel α von mehr als 180 Grad das Lichtgittergehäuse 2 aufnimmt, wobei das Lichtgittergehäuse in der Aufnahme angeordnet wird, indem das Lichtgittergehäuse in einer ersten Orientierung in die Aufnahme des Basisteils eingeführt wird und gemäß Figur 8 in der Aufnahme um 90° in Pfeilrichtung gedreht wird und von der Aufnahme gemäß Figur 9 durch Kraftschluss gehalten wird. An der Stirnseite des Basisteils 4 ist eine Winkelskala 36 angeordnet, um das Lichtgittergehäuse zu justieren. Mit Hilfe einer Positionsmarke 38 an dem Lichtgittergehäuse 1 kann eine bestimmte Drehposition, eingestellt auf einen bestimmten Winkel an der Winkelskala 36 abgelesen werden und jederzeit erneut exakt eingestellt werden, beispielsweise bei einem Austausch des Lichtgittergehäuses 1.

### Bezugszeichen:

- 1: Lichtgittergehäuse
- 2: Befestigungsvorrichtung
- 4: Basisteil
- 6: Klemmteil
- 8: Schraube
- 10: Scheibe
- 12: Montagekörper
- 14: Gehäuse
- 16: Frontscheibe
- 18: Anschluss
- 20: Endkappen
- 22: schräge Fläche
- 24: offene Aufnahme
- 26: Aufnahme
- 28: Befestigungsöffnungen
- 30: Kreisabschnitt
- 32: rechteckförmiger Bereich
- 34: teilrunder Gehäusequerschnitt
- 36: Winkelskala
- 38: Positionsmarke
- α: Winkel

## Patentansprüche

1. Befestigungsvorrichtung mit einem Basisteil (4) und einem Lichtgittergehäuse (1), zum Befestigen und/oder Justieren des Lichtgittergehäuses (1) mit einem teilrunden Gehäusequerschnitt (34) in einem Gehäuseabschnitt an einem Montagekörper (12),
wobei,
das Basisteil (4) eine offene Aufnahme (24) für das Lichtgittergehäuse (1) aufweist, wobei die Aufnahme (24) im Querschnitt einen Kreisabschnitt (30) bildet und der Kreisabschnitt (30) einen Winkel (α) von mehr als 180 Grad aufweist, **dadurch gekennzeichnet, dass** die Aufnahme (24) des Basisteils (4) geringfügig kleiner ausgebildet ist als der teilrunde Gehäusequerschnitt (34) des Gehäuseabschnitts, wobei das Lichtgittergehäuse (1) in der Aufnahme (24) angeordnet ist und von der Aufnahme (24) durch verdrehen Kraftschlüssig gehalten ist.

2. Befestigungsvorrichtung nach Anspruch 1, **dadurch gekennzeichnet, dass** an dem Basisteil (4) ein Klemmteil (6) mittels einer Schraube (8) befestigt ist.

3. Befestigungsvorrichtung nach einem der vorhergehenden Ansprüche, **dadurch gekennzeichnet, dass** das Basisteil (4) Befestigungsöffnungen (28) aufweist, die senkrecht zueinander sind, die alternative Befestigungen des Basisteils (4) mit dem Montagekörper (12) ermöglichen, wobei die Montage des Basisteils (4) in jeweils einer der zwei zueinander senkrechten Richtungen erfolgt.

4. Befestigungsvorrichtung nach einem der vorhergehenden Ansprüche, **dadurch gekennzeichnet, dass** das Lichtgittergehäuse (1) abschnittsweise einen rechteckförmigen Bereich (32) aufweist, welcher einen Anschlag und/oder eine Positionsmarke für das Basisteil (4) in Längsrichtung an dem Lichtgittergehäuse (1) bildet.

5. Befestigungsvorrichtung nach einem der vorhergehenden Ansprüche, **dadurch gekennzeichnet, dass** auf einer Stirnseite des Basisteils (4) eine Winkelskala (36) angeordnet ist.

6. Befestigungsvorrichtung nach einem der vorhergehenden Ansprüche, **dadurch gekennzeichnet, dass** das Basisteil (4) und/oder das Klemmteil (6) aus Polyphthalamid, Kurzzeichen PPA, mit einem Glasfaseranteil von 20 % bis 40%, insbesondere 30% besteht.

7. Verfahren zum Befestigen und/oder Justieren eines Lichtgittergehäuses (1) mit einem teilrunden Gehäusequerschnitt (34) in einem Gehäuseabschnitt mit einem Basisteil (4) an einem Montagekörper (12),
wobei
das Basisteil (4) mittels einer offenen Aufnahme das Lichtgittergehäuse (1) aufnimmt, wobei die Aufnahme (24) im Querschnitt einen Kreisabschnitt (30) bildet und der Kreisabschnitt (30) einen Winkel (α) von mehr als 180 Grad aufweist, **dadurch gekennzeichnet, dass** das Lichtgittergehäuse (1) in der Aufnahme (24) angeordnet wird, indem das Lichtgittergehäuse (1) in einer ersten Orientierung in die Aufnahme (24) des Basisteils (4) eingeführt wird und in der Aufnahme (26) um 90° gedreht wird, wobei die Aufnahme (24) des Basisteils (4) geringfügig kleiner ausgebildet ist als der teilrunde Gehäusequerschnitt (34) des Gehäuseabschnitts und von der Aufnahme (24) durch Kraftschluss gehalten wird.

8. Verfahren nach Anspruch 7, **dadurch gekennzeichnet, dass** an dem Basisteil (4) ein Klemmteil (6) mittels einer Schraube (8) befestigt wird.

9. Verfahren nach einem der vorhergehenden Ansprüche 7 bis 8, **dadurch gekennzeichnet, dass** das Basisteil (4) Befestigungsöffnungen (2) aufweist, die senkrecht zueinander sind, zur Befestigung des Basisteils (4) mit dem Montagekörper (12) alternativ in zwei zueinander senkrechten Richtungen.

10. Verfahren nach einem der vorhergehenden Ansprüche 7 bis 9, **dadurch gekennzeichnet, dass** das Lichtgittergehäuse abschnittsweise einen rechteckförmigen Bereich (32) aufweist, welcher als Anschlag und/oder als Positionsmarke an dem Basisteil (4) in Längsrichtung des Lichtgittergehäuses (1) wirkt.

11. Verfahren nach einem der vorhergehenden Ansprüche 7 bis 10, **dadurch gekennzeichnet, dass** das Lichtgittergehäuse (1) mit Hilfe einer Winkelskala (36) auf einer Stirnseite des Basisteils (4) justiert wird.

## Claims

1. A fastening apparatus having a base part (4) and a light grid housing (1), for fastening and/or adjusting the light grid housing (1) having a partly round housing cross-section (34) in a housing section at an assembly body (12),
wherein
the base part (4) has an open receiver (24) for the light grid housing (1), with the receiver (24) forming a circular section (30) in cross-section and the circular section (30) having an angle (α) of more than 180 degrees, **characterized in that** the receiver (24) of the base part (4) is slightly smaller than the partly round housing cross-section (34) of the housing section, with the light grid housing (1) being arranged in the receiver (24) and being held by the receiver (24) with force transmission by rotation.

2. A fastening apparatus in accordance with claim 1, **characterized in that** a clamping part (6) is fastened to the base part (4) by means of a screw (8).

3. A fastening apparatus in accordance with one of the preceding claims, **characterized in that** the base part (4) has fastening openings (28) which are perpendicular to one another and which enable alternative fastenings of the base part (4) to the assembly body (12), wherein the assembly of the base part (4) takes place in a respective one of the two mutually perpendicular directions.

4. A fastening apparatus in accordance with any one of the preceding claims, **characterized in that** the light grid housing (1) has a rectangular region (32) sectionally which forms an abutment and/or a position mark for the base part (4) in the longitudinal direction at the light grid housing (1).

5. A fastening apparatus in accordance with any one of the preceding claims, **characterized in that** an angle scale (36) is arranged at an end face of the base part (4).

6. A fastening apparatus in accordance with any one of the preceding claims, **characterized in that** the base part (4) and/or the clamping part (6) comprises/comprise polyphthalamide, abbreviation PPA, having a glass fiber portion of 20% to 40%, in particular of 30%.

7. A method of fastening and/or adjusting a light grid housing (1) having a partly round housing cross-section (34) in a housing section having a base part (4) at an assembly body (12),
wherein
the base part (4) receives the light grid housing (1) by means of an open receiver, wherein the receiver (24) forms a circular section (30) in cross-section and the circular section (30) has an angle (α) of more than 180 degrees, **characterized in that** the light grid housing (1) is arranged in the receiver (24) **in that** the light grid housing (1) is introduced into the receiver (24) of the base part (4) in a first orientation and is rotated by 90° in the receiver (26), wherein the receiver (24) of the base part (4) is slightly smaller than the partly round housing cross-section (34) of the housing section and is held by the receiver (24) by force-transmission.

8. A method in accordance with claim 8, **characterized in that** a clamping part (6) is fastened to the base part (4) by means of a screw (8).

9. A method in accordance with one of the preceding claims 7 or 8, **characterized in that** the base part (4) has fastening openings (2) which are perpendicular to one another for fastening the base part (4) to the assembly body (12), alternatively in two mutually perpendicular directions.

10. A method in accordance with any one of the preceding claims 7 to 9, **characterized in that** the light grid housing has a rectangular region (32) sectionally which acts as an abutment and/or as a position mark at the base part (4) in the longitudinal direction of the light grid housing (1).

11. A method in accordance with any one of the preceding claims 7 to 10, **characterized in that** the light grid housing (1) is adjusted with the aid of an angle scale (36) at an end face of the base part (4).

## Revendications

1. Dispositif de fixation comprenant une partie de base (4) et un boîtier pour barrière lumineuse (1), pour la fixation et/ou l'ajustement du boîtier pour barrière lumineuse (1), présentant une section de boîtier partiellement ronde (34), dans une portion de boîtier sur un corps de montage (12),
dans lequel
la partie de base (4) comporte une réception ouverte (24) pour le boîtier pour barrière lumineuse (1), la réception (24) forme en section transversale une portion circulaire (30) et la portion circulaire (30) présente un angle (α) de plus de 180°,
**caractérisé en ce que** la réception (24) de la partie de base (4) est réalisée légèrement plus petite que la section de boîtier partiellement ronde (34) de la portion de boîtier, et le boîtier pour barrière lumineuse (1) est agencé dans la réception (24) et est retenu par la réception (24) en coopération de forces par rotation.

2. Dispositif de fixation selon la revendication 1, **caractérisé en ce qu'**une pièce de coincement (6) est fixée sur la partie de base (4) au moyen d'une vis (8).

3. Dispositif de fixation selon l'une des revendications précédentes, **caractérisé en ce que** la partie de base (4) comporte des ouvertures de fixation (28), qui sont mutuellement perpendiculaires et qui permettent des variantes de fixation de la partie de base (4) avec le corps de montage (12), et le montage de la partie de base (4) a lieu respectivement dans l'une des deux directions mutuellement perpendiculaires.

4. Dispositif de fixation selon l'une des revendications précédentes, **caractérisé en ce que** le boîtier pour barrière lumineuse (1) comprend par portions une zone de forme rectangulaire (32), qui forme une butée et/ou une marque de position pour la partie de base (4) en direction longitudinale sur le boîtier pour barrière lumineuse (1).

5. Dispositif de fixation selon l'une des revendications précédentes, **caractérisé en ce qu'**une échelle angulaire (36) est agencée sur une face frontale de la partie de base (4).

6. Dispositif de fixation selon l'une des revendications précédentes, **caractérisé en ce que** la partie de base (4) et/ou la pièce de coincement (6) sont en polyphthalamide, par abréviation PPA, avec une part de fibres de verre de 20 à 40 %, en particulier 30 %.

7. Procédé pour la fixation et/ou pour l'ajustement d'un boîtier pour barrière lumineuse (1) avec une section transversale du boîtier (34) partiellement ronde dans une portion de boîtier avec une partie de base (4) sur un corps de montage (12),
dans lequel
la partie de base (4) reçoit le boîtier pour barrière lumineuse (1) au moyen d'une réception ouverte, dans lequel la réception (24) forme en section transversale une portion circulaire (30), et la portion circulaire (30) présente un angle (α) de plus de 180°, **caractérisé en ce que** le boîtier pour barrière lumineuse (1) est agencé dans la réception (24) **en ce que** l'on introduit le boîtier pour barrière lumineuse (1) dans une première orientation dans la réception (24) de la partie de base (4), et on la tourne de 90° dans la réception (26), dans lequel la réception (24) de la partie de base (4) est réalisée légèrement plus petite que la section de boîtier partiellement ronde (34) de la portion de boîtier, qui est retenue par la réception (24) en coopération de forces.

8. Procédé selon la revendication 7, **caractérisé en ce qu'**une pièce de coincement (6) est fixée sur la partie de base (4) au moyen d'une vis (8).

9. Procédé selon l'une des revendications précédentes 7 ou 8, **caractérisé en ce que** la partie de base (4) comporte des ouvertures de fixation (2), qui sont mutuellement perpendiculaires, pour la fixation de la partie de base (4) avec le corps de base (12) en variante dans deux directions mutuellement perpendiculaires.

10. Procédé selon l'une des revendications précédentes 7 à 9, **caractérisé en ce que** le boîtier pour barrière lumineuse comprend par portions une zone de forme rectangulaire (32), qui fait office de butée et/ou de marque de position sur la partie de base (4) en direction longitudinale du boîtier pour barrière lumineuse (1).

11. Procédé selon l'une des revendications précédentes 7 à 10, **caractérisé en ce que** le boîtier pour barrière lumineuse (1) est ajusté sur une face frontale de la partie de base (4) avec l'aide d'une échelle angulaire (36).
